# FASCICULE DE BREVET EUROPEEN

(11) **EP 1 404 450 B1**
(45) Date de publication et mention de la délivrance du brevet: **23.11.2005**
(21) Numéro de dépôt: 02764960.7
(22) Date de dépôt: 09.07.2002
(51) Int. Cl.: B03C 1/28, B03C 1/035, G01N 35/00

(54) **PROCEDE DE TRAITEMENT DE PARTICULES MAGNETIQUES ET APPAREIL D'ANALYSE BIOLOGIQUE UTILISANT DES AIMANTS**
BEHANDLUNGSVERFAHREN FÜR MAGNETISCHE TEILCHEN UND BIOANALYSE-APPARAT MIT MAGNETVERWENDUNG
METHOD FOR TREATING MAGNETIC PARTICLES AND BIOLOGICAL ANALYSIS DEVICE USING MAGNETS

(30) Priorité: 09.07.2001 FR 0109067
(43) Date de publication de la demande: 07.04.2004
(73) Titulaire: Biomerieux S.A., 69280 Marcy l'Etoile (FR)
(72) Inventeur: COLIN, Bruno, F-69280 Marcy l'Etoile (FR)
(74) Mandataire: Bonneau, Gérard
(86) Numéro de dépôt international: PCT/FR2002/002409
(87) Numéro de publication internationale: WO 2003/006168

(56) Documents cités:
- WO-A-01/05510
- WO-A-97/16835
- FERMIGIER M ET AL: "STRUCTURE EVOLUTION IN A PARAMAGNETIC LATEX SUSPENSION" JOURNAL OF MAGNETISM AND MAGNETIC MATERIALS, ELSEVIER SCIENCE PUBLISHERS, AMSTERDAM, NL, vol. 122, no. 1 / 3, 1 avril 1993 (1993-04-01), pages 46-50, XP000362551 ISSN: 0304-8853
- PATENT ABSTRACTS OF JAPAN vol. 014, no. 325 (P-1075), 12 juillet 1990 (1990-07-12) & JP 02 107968 A (OLYMPUS OPTICAL CO LTD), 19 avril 1990 (1990-04-19)

## Description

La présente invention concerne un procédé de traitement de particules magnétiques présentes en solution dans un récipient, les particules magnétiques étant ou non associées à des entités biologiques (anticorps, antigènes, acides nucléiques, etc.). Le traitement envisagé peut consister en une remise en suspension, un lavage ou un déplacement des particules magnétiques qui sous l'action d'un aimant particulier ont des caractéristiques nouvelles. La présente invention concerne également des configurations d'aimants, dont au moins une permet la mise en oeuvre du procédé précédemment évoqué.

Le procédé selon l'invention peut être utile dans le domaine du diagnostic biologique consistant, par exemple, à déceler une maladie à partir de l'analyse de molécules biologiques (protéine, acide nucléiques, etc.) extraites de prélèvements biologiques (urines, sang, liquide céphalo-rachidien, sédiment, crachat). Dans ce cadre de la recherche, on souhaite notamment pouvoir extraire et concentrer ces molécules biologiques, dans des conditions compatibles avec les tests d'activité de certaines protéines ou des acides nucléiques, afin de mettre en évidence la présence, chez les personnes malades, d'une molécule biologique particulière. Une méthode consiste à associer ces molécules biologiques à des particules magnétiques. Ces molécules sont appelées molécules de reconnaissance. Dans un mode particulier de réalisation, celles-ci peuvent être utilisées pour s'associer ou s'hybrider à des molécules cibles spécifiques de ces molécules de reconnaissance. De plus, il est également possible de détecter précisément ces associations ou hybridations, entre molécules de reconnaissance et molécules cibles, par l'intermédiaire de molécules de détection.

Soumis à divers champs magnétiques, ces particules magnétiques, qui forment un support solide, permettent le piégeage des molécules biologiques qui leur sont associées afin de les concentrer dans une solution, ou de les extraire d'une solution. Ainsi, une méthode permettant la concentration ou la délétion de particules magnétiques associées à des molécules biologiques a été décrit dans la demande WO-A-99/59694. Des aimants suffisamment puissants pour piéger les particules magnétiques sont disposés le long d'un tube dans lequel circulent les particules en solution, afin d'obtenir une solution, dépourvue de particules magnétiques et donc dépourvues en molécules biologiques qui leur étaient associées.

Cette technique de piégeage de particules magnétiques associées à des molécules biologiques est également utilisée pour des étapes de lavage de ces molécules biologiques par succession d'étapes d'aspiration du liquide de lavage et de remise en suspension dans un nouveau liquide de lavage. Ainsi, dans les automates de type permettant d'effectuer des dosages immunologiques, les particules magnétiques, en solution dans les cuves de l'automate, sont piégées par un champ magnétique appliqué latéralement, et se retrouve en amas sur les parois des cuves. Le liquide est aspiré alors que les particules magnétiques sont retenues. Cette étape d'aspiration est suivie d'une étape de remise en suspension. Pour cela, les particules magnétiques sont soumises à un champ magnétique inverse, et à l'injection brutale de liquide de lavage. Une succession d'étapes d'aspiration et de remise en suspension permet ainsi le lavage des particules.

Une autre technique de lavage a été décrite dans la demande WO-A-01/05510. Les particules magnétiques sont présentes en solution dans une cuve ou un tube. Le lavage s'effectue par passage des particules magnétiques d'un coté à un autre de la cuve ou du tube par une succession d'aimants, appliqué d'un coté puis de l'autre de la cuve. Le piégeage de ces particules au fond du tube par un aimant permet d'une façon comparable à ce qui a été décrit précédemment l'aspiration du liquide dans lequel étaient diluées les particules magnétiques. La demande de brevet WO-A-01/05510 propose une telle technique de lavage, dont notre invention se distingue par les caractéristiques techniques additionnelles qui nous sont propres, à savoir :
- faire subir au moins une aimantation de faible intensité à des particules magnétiques en solution dans un récipient, et
- positionner les particules magnétiques sont sous la forme de filaments orientés selon l'axe nord sud de la source d'aimantation.

Ces deux points ne se retrouvent donc pas dans ce document, qui ne précise nullement l'intensité de l'aimantation, et qui conserve les particules magnétiques sous la forme de culot. De plus, l'article de Fermigier M *et al.* XP000362551 concerne une technique de lavage qui propose des informations complémentaires sur des agrégats linéaires sous un champ magnétique constant du bien alternatif. Si l'on peut considérer que les particules magnétiques sont sous la forme de filaments, ceci n'est pas dû à au moins une aimantation de faible intensité.

L'association de particules magnétiques à des molécules biologiques permet également le déplacement de ces molécules biologiques d'un compartiment à un autre pour permettre par exemple leur concentration. C'est le cas dans la demande de brevet FR00/15417 du 17 novembre 2000. Ainsi, dans les biopuces, un champ magnétique plan et constant permet le drainage de ces particules d'un point à un autre lors des étapes de concentration de ces particules dans un compartiment donné de la biopuce.

Toutefois, un champ magnétique de forte intensité, s'il permet un piégeage rapide et efficace, peut provoquer la formation d'amas de particules, souvent difficile à remettre en suspension si une étape supplémentaire d'agitation n'est pas réalisée. La formation de ces amas a également pour conséquence de diminuer l'efficacité du lavage de ces particules magnétiques, puisque le liquide de lavage ne peut accéder à la totalité des particules. Enfin, ce champ magnétique constant et de forte intensité ne permet généralement pas le drainage de la totalité des particules d'un point donné à un autre, du fait des importantes forces de frottement qui sont associées à ce déplacement. Ceci peut être préjudiciable pour les résultats des tests qui seront effectués ultérieurement (faux négatifs, faux positifs, diminution de la sensibilité et de la spécificité) ou lorsque l'on souhaite récupérer, pour des raisons économiques ou de disponibilité en matériel biologique, la totalité des molécules biologiques associées aux particules magnétiques.

La présente invention se propose de résoudre l'ensemble des inconvénients de l'état de la technique en présentant une disposition particulière des particules magnétiques dans un liquide favorisant leur remise en suspension, leur lavage et/ou leur déplacement. L'invention est basée sur la disposition en filaments des particules magnétiques dans un liquide, en réponse à un champ magnétique particulier, généralement de faible intensité, filaments qui sont disposés selon l'axe sud-nord de l'aimant induisant le champ magnétique.

A cet effet, la présente invention concerne un procédé de traitement de particules magnétiques présentes en solution dans un récipient, les particules magnétiques étant ou non associées à des entités biologiques (anticorps, antigènes, acides nucléiques, etc.), le procédé consiste à :
- soumettre lesdites particules magnétiques (5) à un champ magnétique constant sous forme d'une aimantation qui est fonction essentiellement de deux valeurs, T et D,
où :
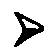 T correspond à l'induction magnétique de la source d'aimantation (7 ou 9), exprimée par exemple en milliTesla (mT), et
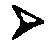 D correspond à la distance séparant cette source d'aimantation (7 ou 9) du fond (3) du récipient (1), exprimée par exemple en millimètres (mm), tel que lorsque T est comprise entre 5 et 400 mT, D est inférieure ou égale à 50 mm pour des particules magnétiques (5) ESTAPOR (marque déposée - référence : M1 70/60), de diamètre sensiblement inférieur à 1µ (Merk eurolab - Pitiviers France),
de sorte que lesdites particules magnétiques sont disposées en filaments orientés selon l'axe nord sud de la source d'aimantation,
- déplacer la source d'aimantation et/ou le récipient, tout en maintenant l'aimantation sur les particules magnétiques, et
- annuler l'aimantation sur les particules magnétiques en déplaçant ladite source d'aimantation et/ou le récipient et/ou en stoppant la source d'aimantation.

Préférentiellement, l'induction magnétique T de la source d'aimantation est comprise entre 10 et 50 mT, et la distance séparant cette source d'aimantation du récipient est comprise entre 3 et 15 mm, pour des particules magnétiques ESTAPOR (marque déposée) précédemment définies.

Lorsque la distance séparant la source d'aimantation du fond du récipient est nulle, c'est-à-dire que ladite source et ledit fond sont au contact, l'induction magnétique T de la source d'aimantation est inférieure à 5 mT pour des particules magnétiques ESTAPOR (marque déposée) précédemment définies.

Dans le cas où le procédé permet le lavage des particules magnétiques, le déplacement de la source d'aimantation et/ou du récipient, tout en maintenant l'effet magnétique sur les particules magnétiques est réalisé par la variation entre -90° et +90° de l'angle entre l'axe nord sud de ladite source d'aimantation et l'axe dudit récipient. Cette disposition permet ainsi un lavage des particules plus efficace : le champ magnétique de faible intensité, soumis à une rotation d'un angle de -90° à +90°, induit le mouvement des filaments qui sont penchés d'un coté et de l'autre. Par comparaison avec l'art antérieur, cette disposition augmente le contact entre les particules magnétiques et le liquide de lavage et de ce fait, augmente l'efficacité du lavage sans qu'il soit nécessaire de remettre les particules en suspension.

Dans le cas où le procédé permet la remise en suspension des particules magnétiques, l'aimantation de la source d'aimantation est maintenue sur les particules magnétiques lors de l'injection d'un liquide de reprise desdites particules magnétiques au sein du récipient, puis est coupée après cette injection. Cette disposition permet ainsi une remise en suspension plus facile des particules magnétiques. Lorsque le volume de liquide augmente, le champ magnétique devient trop faible pour maintenir les particules en filaments, qui se remettent alors spontanément en suspension. Par rapport à l'art antérieur, l'ajout de liquide est selon l'invention suffisant pour remettre la totalité des particules en suspension sans étape d'agitation supplémentaire ou champ magnétique inverse.

Dans un mode préférentiel de réalisation du procédé permettant la remise en suspension des particules magnétiques, lesdites particules magnétiques sont disposées en filaments orientés selon l'axe nord sud de la source d'aimantation et parallèlement au mouvement d'injection du liquide de reprise.

Dans le cas où le procédé permet le déplacement de particules magnétiques, le déplacement de la source d'aimantation et/ou du récipient, tout en maintenant l'aimantation sur les particules magnétiques est réalisée par la rotation de 360° de l'angle entre l'axe nord sud de ladite source d'aimantation et l'axe dudit récipient. Lorsque ce champ magnétique est soumis à des rotations successives de 360° et à un déplacement à faible vitesse selon un axe horizontal, les particules, formant un filament, se penchent jusqu'à se coucher complètement, puis se relèvent du coté opposé, puis se penchent, se couchent, se relèvent..., et avancent ainsi progressivement dans le sens opposé du déplacement latéral du champ magnétique. Par comparaison avec l'art antérieur, les forces de frottement associées au déplacement de ces particules sont plus faibles, ce qui permet d'accroître le nombre de particules acheminées d'un point à un autre.

Dans ce dernier cas, la rotation de 360° est effectuée une pluralité de fois afin d'obtenir un déplacement idoine des particules magnétiques.

La présente invention concerne également un appareil d'analyse biologique, par exemple de dosage immunologique, appareil comprenant des moyens de guidage et de déplacement de récipients de réaction sur au moins un trajet comprenant un nombre prédéterminé de positions. Cet appareil comporte une configuration d'aimants pour chaque trajet, la configuration d'aimants étant constituée :
- en amont d'une pluralité de sources d'aimantation de forte intensité, de sorte que les particules magnétiques sont agglomérées contre la paroi du récipient, et
- en aval d'une source d'aimantation de faible intensité, telle que définie ci-dessus, de sorte que lesdites particules magnétiques sont disposées en filaments orientés selon l'axe nord sud de la source d'aimantation.

Selon une variante, chaque source d'aimantation de forte intensité est d'une induction magnétique de 20 à 100 fois, préférentiellement de 30 à 60 fois supérieure à la source d'aimantation de faible intensité, et chaque source d'aimantation de forte intensité est à une distance du récipient de 5 à 20 fois, préférentiellement de 10 à 15 fois inférieure à la distance séparant la source d'aimantation de faible intensité.

Selon une autre variante, chaque source d'aimantation de forte intensité est en position perpendiculaire à la source d'aimantation de faible intensité, par rapport au récipient.

Selon encore une autre variante, chaque source d'aimantation de forte intensité est en position latérale par rapport à l'axe passant par l'ouverture et le fond du récipient, et la source d'aimantation de faible intensité est située sous ledit fond dudit récipient, en vis-à-vis de son ouverture.

Toujours selon une variante, plus la source d'aimantation de forte intensité est en position proche, le long du trajet comprenant un nombre prédéterminé de positions, de la source d'aimantation de faible intensité, plus ladite source d'aimantation de forte intensité est en position proche du fond du récipient.

Selon une autre variante, la source d'aimantation de forte intensité est constituée :
- d'une rangée d'aimants située du même côté des récipients, ou
- de deux rangées d'aimants situées de part et d'autre des récipients,
les aimants d'une même rangée étant positionnés côte à côte, avec les pôles nord-sud orientés de manière identique.

Selon cette dernière variante, la source d'aimantation de forte intensité comporte au moins un aimant à polarisation inversée (champ inverse) qui favorise le « décollage » des particules magnétiques.

Les figures ci-jointes sont données à titre d'exemple explicatif et n'ont aucun caractère limitatif. Elles permettront de mieux comprendre l'invention.
La figure 1 représente un récipient contenant des particules magnétiques qui sont agglomérées sous l'action d'un aimant de forte intensité, selon l'état de la technique.
La figure 2 représente une vue identique à la précédente mais dans laquelle les particules magnétiques sont disposées en filaments selon l'axe nord-sud d'un aimant de faible intensité.
La figure 3 représente une vue identique à la figure 2 mais dans laquelle les particules magnétiques disposées en filaments selon l'axe nord-sud d'un aimant de faible intensité sont soumis à une rotation de sensiblement 30° par rapport à l'axe central et vertical du récipient contenant les particules magnétiques. Cette configuration facilite le lavage desdites particules magnétiques.
La figure 4 représente une vue en coupe d'un récipient à fond plat, où un seul filament de particules magnétiques est illustré pour faciliter la compréhension du procédé de déplacement des particules magnétiques. L'aimant simple de l'aimant composé qui agit sur les particules magnétiques étant sans inclinaison.
La figure 5 représente une vue identique à la précédente, mais l'aimant simple qui agit sur les particules magnétiques est incliné de 45° par rapport à la figure 4.
La figure 6 représente une vue identique aux précédentes, mais l'aimant simple qui agit sur les particules magnétiques est incliné de 90° par rapport à la figure 4.
La figure 7 représente une vue identique aux précédentes, mais l'aimant simple qui agit sur les particules magnétiques est incliné de 135° par rapport à la figure 4.
Enfin, la figure 8 représente une vue identique aux précédentes, mais l'aimant simple qui agit sur les particules magnétiques est incliné de 180° par rapport à la figure 4.

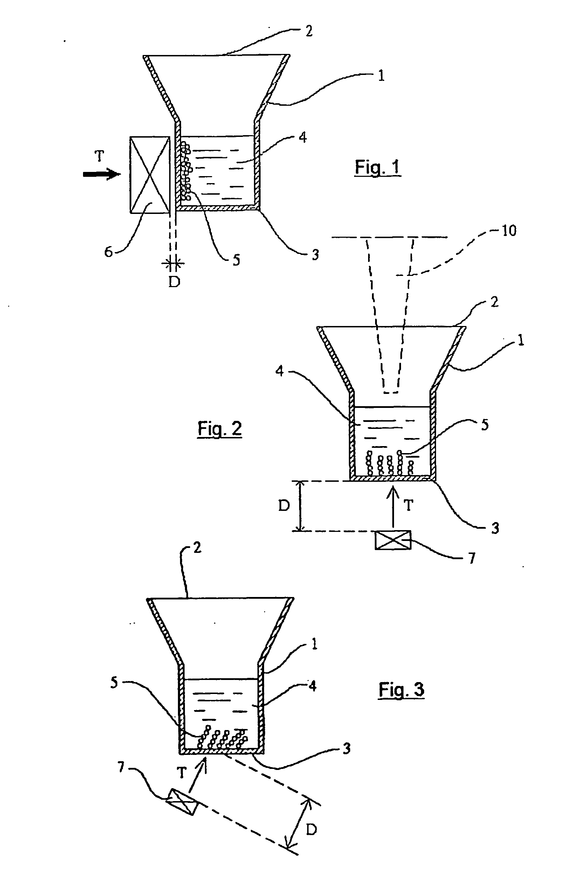

Le mode de réalisation représenté à la figure 1 constitue l'état de la technique le plus couramment utilisé depuis de nombreuses années pour piéger des particules magnétiques 5 dans des cuvettes utilisées dans des automates d'analyses biologiques. L'aimant 6 est puissant, avec une intensité magnétique T comprise par exemple entre 450 et 500 mT et une distance séparant ledit aimant 6 et le côté du récipient 1 qui est de quelques millimètres. Dans ces conditions, on remarque que les particules magnétiques 5 sont amalgamées les unes aux autres pour former un dépôt. Il est bien évident que sous cette forme, la remise en suspension desdites particules magnétiques 5 n'est pas facilitée et nécessitera une injection de liquide suffisamment puissante, et ce sous un angle tout à fait particulier. La puissance de cette injection doit toutefois être bien maîtrisée pour éviter les éclaboussures, pouvant souiller l'intérieur de l'automates, et pour empêcher la détérioration des constituants biologiques présents au sein de la cuvette, ce qui risquerait de fausser les résultats biologiques observés. De plus, la remise en suspension n'est jamais totale, puisque certaines particules magnétiques 5 restent amalgamées entre elles même une fois en solution .

La présente invention propose une solution qui permet non seulement le piégeage, mais également le lavage, la remise en suspension et le déplacement desdites particules magnétiques 5. Ainsi on remarque en figure 2 que, sous une aimantation de faible intensité magnétique T comprise par exemple entre 10 et 20 mT et à une distance séparant ledit aimant 7 et le fond 3 du récipient 1 qui est de 13 millimètres, les particules magnétiques 5 ne sont pas amalgamées mais se présentent sous la forme de filaments où les particules magnétiques 5 d'un même filament sont les unes sur les autres selon un axe sensiblement longitudinale. Il est bien évident que sous cette forme, la remise en suspension desdites particules magnétiques 5 est bien plus aisée. De plus, l'injection d'un liquide, par exemple par l'intermédiaire d'une pipette, dont on ne voit que l'embout 10 sur la figure 2, facilitera cette remise en solution. La technique est encore améliorée si l'axe, selon lequel l'injection de liquide est effectuée, est dirigé contre le fond 3 du récipient 1 et que ledit axe longitudinal des filaments est sensiblement parallèle audit axe d'injection.

Les exemples suivants sont donnés à titre illustratif et n'ont aucun caractère limitatif. Ils permettront de mieux comprendre l'invention.

### Exemple 1 - Choix des caractéristiques structurelles d'un aimant selon l'invention pour permettre la remise en suspension des particules magnétiques :

Les particules magnétiques sont en solution dans des cuves 1 pour automates Magia (marque déposée). Les étapes de remise en suspension comportent :
1- une étape d'aspiration : Les particules magnétiques 5 ESTAPOR (marque déposée - référence : M1 70/60), de diamètre sensiblement inférieur à 1µ (Merk curolab - Pitiviers France) sont piégées par un champ magnétique d'une intensité de 450 à 500 mT appliqué latéralement par l'intermédiaire d'aimant classique 6, et se retrouvent en amas sur les parois des cuves. C'est par exemple ce qui est représenté en figure 1, mais au niveau du fond 3 d'un récipient 1. Le liquide 4, contenu par ce récipient 1, est aspiré alors que les particules magnétiques 5 sont retenues. Le volume restant après l'aspiration est de l'ordre de 50 à 80µl.
2- une étape de remise en suspension : Cette étape de remise en suspension s'effectue par l'application latérale d'un champ magnétique inverse et de l'ajout brutal de liquide 4 dans le récipient 1 de l'ordre de 450 µl à 1 ml. Cette étape de remise en suspension n'est que partielle puisqu'il reste des petits amas de particules sur les parois latérales des récipients 1.
3- répétition des étapes précédentes : Les étapes 2 et 3 sont répétées aussi souvent que l'appareil d'immunodosage le nécessite pour réaliser les étapes de distribution, aspiration, concentration.
4- une dernière étape de remise en suspension : Celle-ci consiste à remettre la totalité des particules magnétiques 5 en suspension avant l'étape d'analyse. Pour cela, un premier champ magnétique d'une intensité de 120 mT est situé sous les récipients 1 à une distance de 3 mm. Le liquide 4 est aspiré, les particules 5 sont retenues d'une façon comparable à ce qui est décrit dans l'étape 1. Ce premier champ magnétique n'est absolument pas obligatoire même s'il procure certains avantages de drainage des particules magnétiques sur le fond du récipient 1, ou de remise en suspension. Lesdites particules magnétiques 5, dans le volume de liquide 4 restant, compris entre 50 et 80 µl, sont soumis à un second champ magnétique de valeur variable, situé sous les cuves à une distance elle-même variable. Les résultats obtenus sont décrits dans le tableau suivant :

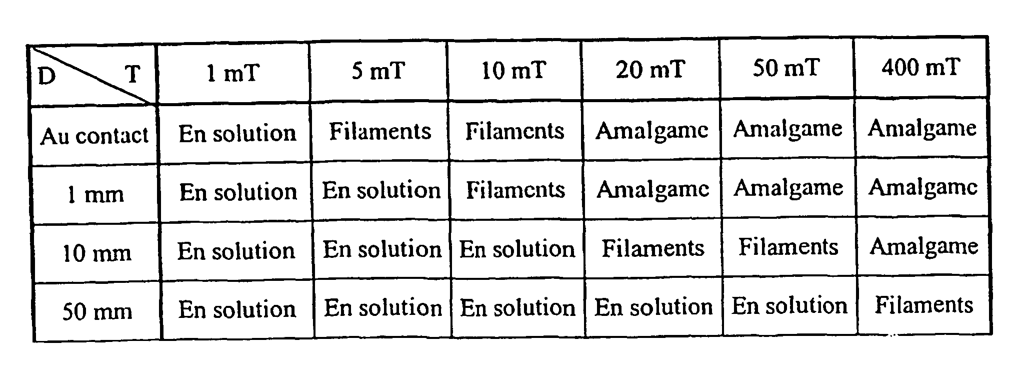

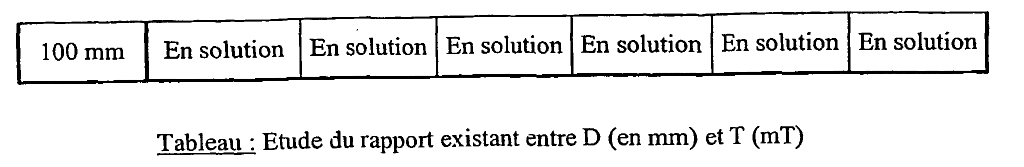

Dans les cas mentionnés ci-dessus, les particules magnétiques 5 se disposent spontanément, sous l'action de ce champ magnétique faible, sous la forme de filaments. Ces filaments de particules 5 sont ensuite remis aisément en suspension par l'ajout de 450 à 500 µl de liquide par l'ouverture 2 du récipient 1. Bien entendu, ces appréciations sur la nature filamenteuse, en solution ou amalgamée des particules magnétiques sont dues à une échelle arbitraire mais qui est commune à l'ensemble des échantillons biologiques et des milieux testés. Cette échelle est valable pour cette expérience ainsi que pour toutes les expériences qui suivront. Elle peut être définie de la manière suivante :
- « En solution », il n'y a aucune concentration particulière dans l'échantillon liquide 4
où les particules magnétiques semblent réparties de manière homogène dans tout ledit échantillon 4.
- « Filaments », il y a une certaine concentration dans l'échantillon liquide 4 où les particules magnétiques sont structurées contre une partie de la paroi du récipient 1 en vis-à-vis de l'aimant 7. De tels filaments sont par exemple bien représentés sur la figure 2. A la loupe binoculaire, une lumière incidente passe entre les filaments.
- « Amalgame », il y a une concentration particulière dans l'échantillon liquide 4 où les particules magnétiques sont concentrées contre une partie de la paroi du récipient 1 en vis-à-vis de l'aimant 7. A la loupe binoculaire, une lumière incidente ne traverse pas l'amalgame.

### Exemple 2 - Lavage de particules magnétiques :

Les particules magnétiques 5 sont en solution dans des cuves 1 pour automates Magia (marque déposée). A l'instar de l'exemple 1, on soumet les particules magnétiques 5 à une aimantation de faible intensité, comportant des valeurs adéquates (D = 13 nun et T = 10 mT) pour obtenir des filaments avec des particules magnétiques 5 identiques à l'exemple 1.

L'étape de lavage consiste essentiellement à déplacer l'aimant 7, comme cela est bien représenté à la figure 3 afin de permettre l'inclinaison desdits filaments. On peut bien entendu déplacer également le récipient 1, ou les deux à la fois, c'est-à-dire l'aimant 7 et le récipient 1. La multiplication de ce genre de mouvements permet ainsi d'améliorer très sensiblement l'efficacité du lavage.

Cette efficacité du lavage est particulièrement augmentée en induisant, lorsque les particules magnétiques sont disposées en filament, une rotation oscillant entre -90 et +90° au deuxième champ magnétique de faible intensité décrit dans l'exemple 1. La figure 3 présente ainsi la disposition des particules magnétiques en filaments 1 lors d'une rotation de -30° (A) et +30° (B).

Ces filaments de particules peuvent ensuite être remis aisément en suspension par l'ajout de 450 à 500 µl de liquide, comme cela a déjà été décrit dans l'exemple 1.

### Exemple 3 - Déplacement de particules magnétiques :

Là encore, à l'instar des exemples 1 et 2, on soumet les particules magnétiques 5 à une aimantation de faible intensité, comportant des valeurs adéquates (D = 13 mm et T = 10 mT) pour obtenir des filaments avec des particules magnétiques 5 identiques aux exemples 1 et 2.

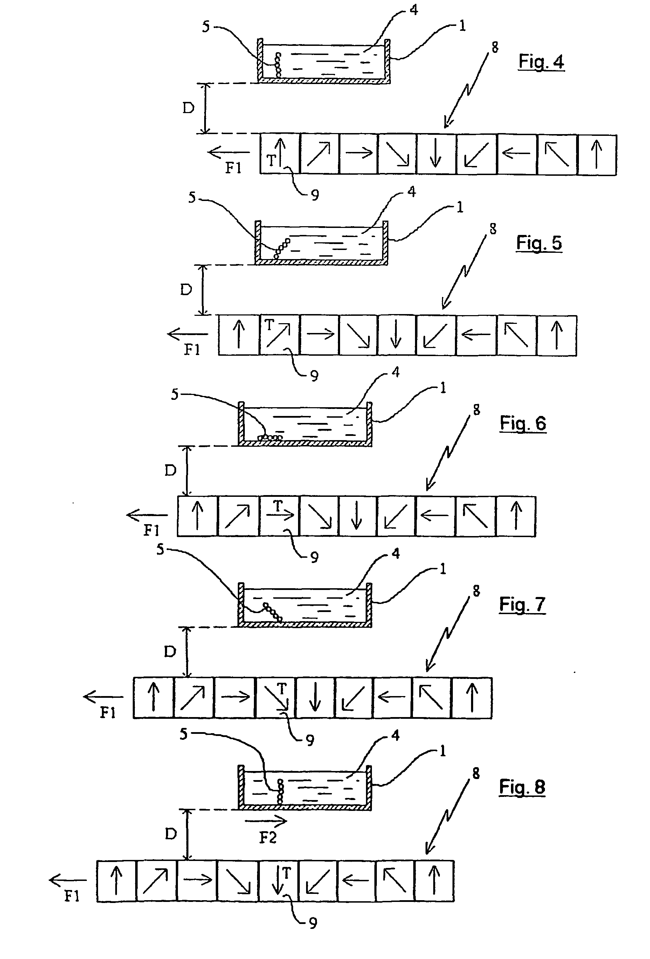

Les figures 4 à 8 montrent plus précisément ce que l'on entend par déplacement. Ces figures ne représentent qu'une rotation sur 180°, par étapes de 45°, mais il est bien évident que plusieurs rotations de 360° permettent d'amplifier considérablement l'amplitude de ce déplacement. Dans un mode préférentiel de réalisation, l'aimant 8 est sous forme de « bande ». Il s'agit d'un aimant composé constitué d'une pluralité d'aimants simples 9, chaque aimant 9 ayant une polarisation nord-sud différente de ces voisins, dans le mode de réalisation présenté, la variation de polarisation est de 45°.

On remarque que lorsque, par exemple, l'aimant 8 est déplacé selon sensiblement son axe longitudinal suivant F1 des figures 4 à 8, les particules magnétiques 5 sont déplacées dans le même temps en sens inverse selon F2 de la figure 8, où l'on remarque bien la différence de position entre le filament de la figure 4 et ce même filament en figure S.

### Exemple 4 - Configuration d'aimants :

En ce qui concernent les configuration d'aimants associant des aimants classiques 6 et des aimants 7 selon l'invention, celles-ci sont utilisables dans des appareils d'analyse biologique, par exemple de dosage immunologique, appareils comprenant des moyens de guidage et de déplacement de récipients 1 de réaction sur au moins un trajet comprenant un nombre prédéterminé de positions. Un tel type d'appareils est bien décrit dans les demandes de brevet EP-A-0.837.331 et WO-A-00/16075.

Un tel appareil comporte une configuration d'aimants pour chaque trajet, la configuration d'aimants 6 et 7 ou 9 étant constituée de la manière suivante :
- en amont d'une pluralité de sources d'aimantation de forte intensité 6, de sorte que les particules magnétiques 5 sont agglomérées contre la paroi du récipient, et
- en aval une source d'aimantation de faible intensité 7 ou 9, telle que décrit dans les exemples précédents, de sorte que lesdites particules magnétiques 5 sont sous la forme de filaments orientés selon l'axe nord sud de la source d'aimantation.

Les rapports qui existent entre chaque source d'aimantation de forte intensité 6 et la source d'aimantation de faible intensité 7 ou 9 sont les suivants :
- une induction magnétique T de 20 à 100 fois, préférentiellement de 30 à 60 fois supérieure, et
- une distance D du récipient 1 de 5 à 20 fois, préférentiellement de 10 à 15 fois inférieure.

Selon les deux demandes de brevet précédemment citées, chaque source d'aimantation de forte intensité 6 est en position latérale par rapport à l'axe passant par l'ouverture 2 et le fond 3 du récipient 1. De plus, chaque source d'aimantation de forte intensité 6 est en position perpendiculaire à la source d'aimantation de faible intensité 7 ou 9, par rapport au récipient 6. Préférentiellement, la source d'aimantation de faible intensité 7 ou 9 est située sous ledit fond 3 dudit récipient 1.

Dans la configuration préférentielle précédemment décrite, plus la source d'aimantation de forte intensité 6 est en position proche, le long du trajet comprenant un nombre prédéterminé de positions, de la source d'aimantation de faible intensité 7 ou 9, plus ladite source d'aimantation de forte intensité 6 est en position proche du fond 3 du récipient 1.

Il est possible d'avoir au moins deux versions différentes de la configuration des aimants 6. Premièrement, la source d'aimantation de forte intensité 6 est constituée d'une rangée d'aimants située du même côté des récipients 1, les aimants 6 étant positionnés côte à côte, avec les pôles nord-sud orientés de manière identique. Deuxièmement, la source d'aimantation de forte intensité 6 est constituée de deux rangées d'aimants situées de part et d'autre des récipients 1, les aimants d'une même rangée étant positionnés côte à côte, avec les pôles nord-sud orientés de manière identique, c'est-à-dire avec les aimants se repoussant.

Pour faciliter le décollement des particules magnétiques 5, la source d'aimantation de forte intensité 6 comporte au moins un aimant à polarisation inversée (champ inverse). Généralement, cet aimant est situé en position la plus aval possible, c'est-à-dire au plus près de l'aimant 7 à faible intensité.

### REFERENCES

1. Récipient
2. Ouverture du récipient 1
3. Fond du récipient 1
4. Liquide contenu par le récipient 1
5. Particules magnétiques contenues par le liquide 4
6. Aimant selon l'état de la technique
7. Aimant simple ou source d'aimantation selon l'invention
8. Aimant composé ou source d'aimantation selon l'invention
9. Aimant simple de l'aimant composé 8 qui agit sur les particules magnétiques 5
10. Embout de pipette
D. Distance séparant la source d'aimantation 7 du fond du récipient 1
F1. Déplacement de l'aimant 8 selon son axe longitudinal
F2. Déplacement des particules 5 en fonction du déplacement de l'aimant 8 selon F1
T. Induction magnétique de la source d'aimantation 7

## Revendications

1. Procédé de traitement de particules magnétiques (5) présentes en solution (4) dans un récipient (1), les particules magnétiques (5) étant ou non associées à des entités biologiques (anticorps, antigènes, acides nucléiques, etc.), le procédé consiste à :
• soumettre lesdites particules magnétiques (5) à un champ magnétique constant sous forme d'une aimantation qui est fonction essentiellement de deux valeurs, T et D, où :
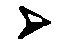 T correspond à l'induction magnétique de la source d'aimantation (7 ou 9), exprimée par exemple en milliTesla (mT), et
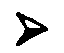 D correspond à la distance séparant cette source d'aimantation (7 ou 9) du fond (3) du récipient (1), exprimée par exemple en millimètres (mm), tel que lorsque T est comprise entre 5 et 400 mT, D est inférieure ou égale à 50 mm pour des particules magnétiques (5) ESTAPOR (marque déposée - référence : M1 70/60), de diamètre sensiblement inférieur à 1µ (Merk eurolab - Pitiviers France),
de sorte que lesdites particules magnétiques (5) sont disposées en filaments orientés selon l'axe nord sud d'une source d'aimantation (7 ou 9),
• déplacer la source d'aimantation (7 ou 9) et/ou le récipient (1), tout en maintenant l'aimantation sur les particules magnétiques (5), et
• annuler l'aimantation sur les particules magnétiques (5) en déplaçant ladite source d'aimantation (7 ou 9) et/ou le récipient (1) et/ou en stoppant la source d'aimantation (7 ou 9).

2. Procédé, selon la revendication 1, **caractérisé en ce que** l'induction magnétique T de la source d'aimantation (7 ou 9) est comprise entre 10 et 50 mT, et **en ce que** la distance séparant cette source d'aimantation (7 ou 9) du récipient (1) est comprise entre 3 et 15 mm.

3. Procédé, selon la revendication 1, **caractérisé en ce que** l'induction magnétique T de la source d'aimantation (7 ou 9) est inférieure à 5 mT lorsque la distance séparant cette source d'aimantation (7 ou 9) du fond (3) du récipient (1) est nulle, c'est-à-dire que ladite source (7 ou 9) et ledit fond (3) sont au contact.

4. Procédé, selon l'une quelconque des revendications 1 à 3, permettant le lavage des particules magnétiques (5), **caractérisé en ce que** le déplacement de la source d'aimantation (7 ou 9) et/ou du récipient (1), tout en maintenant l'effet magnétique sur les particules magnétiques (5) est réalisé par la variation entre -90° et +90° de l'angle entre l'axe nord sud de ladite source d'aimantation (7 ou 9) et l'axe dudit récipient (1).

5. Procédé, selon l'une quelconque des revendications 1 à 3, permettant la remise en suspension des particules magnétiques (5), **caractérisé en ce que** l'aimantation de la source d'aimantation (7 ou 9) est maintenue sur les particules magnétiques (5) lors de l'injection d'un liquide de reprise desdites particules magnétiques (5) au sein du récipient (1), puis est coupé après cette injection.

6. Procédé, selon la revendication 5, **caractérisé en ce que** les particules magnétiques (5) sont disposées en filaments orientés selon l'axe nord sud de la source d'aimantation (7 ou 9) et parallèlement au mouvement d'injection du liquide de reprise.

7. Procédé, selon l'une quelconque des revendications 1 à 3, permettant le déplacement de particules magnétiques (5), **caractérisé en ce** le déplacement de la source d'aimantation (7 ou 9) et/ou du récipient (1), tout en maintenant l'aimantation sur les particules magnétiques (5) est réalisé par la rotation de 360° de l'angle entre l'axe nord sud de ladite source d'aimantation (7 ou 9) et l'axe dudit récipient (1).

8. Procédé, selon la revendication 7, **caractérisé en ce** la rotation de 360° est effectuée une pluralité de fois afin d'obtenir un déplacement idoine des particules magnétiques (5).

9. Appareil d'analyse biologique, par exemple de dosage immunologique, appareil comprenant des moyens de guidage et de déplacement de récipients (1) de réaction sur au moins un trajet comprenant un nombre prédéterminé de positions, **caractérisé par le fait qu'**il comporte une configuration d'aimants pour chaque trajet, la configuration d'aimants (6 et 7 ou 9) étant constituée :
• en amont d'une pluralité de sources d'aimantation de forte intensité (6), de sorte que les particules magnétiques (5) sont agglomérées contre la paroi du récipient, et
• en aval d'une source d'aimantation de faible intensité (7 ou 9), selon l'une quelconque des revendications 1 à 10, de sorte que lesdites particules magnétiques (5) sont disposées en filaments orientés selon l'axe nord sud de la source d'aimantation.

10. Appareil, selon la revendication 9, **caractérisé par le fait que** chaque source d'aimantation de forte intensité (6) est d'une induction magnétique de 20 à 100 fois, préférentiellement de 30 à 60 fois supérieure à la source d'aimantation de faible intensité (7 ou 9), et que chaque source d'aimantation de forte intensité (6) est à une distance du récipient de 5 à 20 fois, préférentiellement de 10 à 15 fois inférieure à la distance séparant la source d'aimantation de faible intensité (7 ou 9).

11. Appareil, selon l'une quelconque des revendications 9 ou 10, **caractérisé par le fait que** chaque source d'aimantation de forte intensité (6) est en position perpendiculaire à la source d'aimantation de faible intensité (7 ou 9), par rapport au récipient (1).

12. Appareil, selon l'une quelconque des revendications 9 à 11, **caractérisé par le fait que** chaque source d'aimantation de forte intensité (6) est en position latérale par rapport à l'axe passant par l'ouverture (2) et le fond (3) du récipient (1), et que la source d'aimantation de faible intensité (7 ou 9) est située sous ledit fond (3) dudit récipient (1).

13. Appareil, selon l'une quelconque des revendications 9 à 12, **caractérisé par le fait que** plus la source d'aimantation de forte intensité (6) est en position proche, le long du trajet comprenant un nombre prédéterminé de positions, de la source d'aimantation de faible intensité (7 ou 9), plus ladite source d'aimantation de forte intensité (6) est en position proche du fond (3) du récipient (1).

14. Appareil, selon l'une quelconque des revendications 9 à 13, **caractérisé par le fait que** la source d'aimantation de forte intensité (6) est constituée :
• d'une rangée d'aimants située du même côté des récipients (1), ou
• de deux rangées d'aimants situées de part et d'autre des récipients (1),
les aimants d'une même rangée étant positionnés côte à côte, avec les pôles nord-sud orientés de manière identique.

15. Appareil, selon la revendication 14, **caractérisé par le fait que** la source d'aimantation de forte intensité (6) comporte au moins un aimant à polarisation inversée (champ inverse) qui favorise le « décollage » des particules magnétiques (5).

## Patentansprüche

1. Ein Verfahren zur Behandlung von magnetischen Partikeln (5), die in Lösung (4) in einem Gefäß (1) vorhanden sind, wobei die magnetischen Partikel (5) mit biologischen Einheiten (Antikörpern, Antigenen, Nukleinsäuren usw.) verbunden oder nicht verbunden sind, wobei das Verfahren aus Folgendem besteht:
• Aussetzen der magnetischen Partikel (5) gegenüber einem konstanten Magnetfeld in Form einer Magnetisierung, die im Wesentlichen von zwei Werten, T und D, abhängt, wobei:
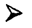 T einer magnetischen Induktion der Magnetisierungsquelle (7 oder 9) entspricht, die zum Beispiel in Millitesla (mT) ausgedrückt wird, und
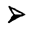 D dem Abstand entspricht, der diese Magnetisierungsquelle (7 oder 9) von dem Boden (3) des Gefäßes (1) trennt, der zum Beispiel in Millimetern (mm) ausgedrückt wird, wie etwa, wenn T zwischen 5 und 400 mT liegt, ist D kleiner oder gleich 50 mm für magnetische Partikel (5) ESTAPOR (eingetragene Marke - Verweis: M1 70/60), die einen Durchmesser aufweisen, der deutlich unter 1µ liegt (Merck Eurolab - Pitiviers, Frankreich),
so dass die magnetischen Partikel (5) in Filamenten angeordnet werden, welche nach der Nord-Süd-Achse einer Magnetisierungsquelle (7 oder 9) ausgerichtet sind,
• Verschieben der Magnetisierungsquelle (7 oder 9) und/oder des Gefäßes (1), während gleichzeitig die Magnetisierung der magnetischen Partikel (5) beibehalten wird, und
• Aufheben der Magnetisierung der magnetischen Partikel (5) durch das Verschieben der Magnetisierungsquelle (7 oder 9) und/oder des Gefäßes (1) und/oder durch das Stoppen der Magnetisierungsquelle (7 oder 9).

2. Verfahren gemäß Anspruch 1, **dadurch gekennzeichnet, dass** die magnetische Induktion T der Magnetisierungsquelle (7 oder 9) zwischen 10 und 50 mT liegt, und **dadurch**, dass der Abstand, der diese Magnetisierungsquelle (7 oder 9) von dem Gefäß (1) trennt, zwischen 3 und 15 mm liegt.

3. Verfahren gemäß Anspruch 1, **dadurch gekennzeichnet, dass** die magnetische Induktion T der Magnetisierungsquelle (7 oder 9) unter 5 mT liegt, wenn der Abstand, der diese Magnetisierungsquelle (7 oder 9) von dem Boden (3) des Gefäßes (1) trennt, null beträgt, das heißt, dass die Quelle (7 oder 9) und der Boden (3) miteinander in Berührung stehen.

4. Verfahren gemäß einem der Ansprüche 1 bis 3, welches das Waschen der magnetischen Partikel (5) ermöglicht, **dadurch gekennzeichnet, dass** die Verschiebung der Magnetisierungsquelle (7 oder 9) und/oder des Gefäßes (1) **dadurch** erfolgt, dass unter Beibehaltung der magnetischen Wirkung auf die magnetischen Partikel (5), der Winkel zwischen der Nord-Süd-Achse der Magnetisierungsquelle (7 oder 9) und der Achse des Gefäßes (1) zwischen -90° und +90° variiert wird.

5. Verfahren gemäß einem der Ansprüche 1 bis 3, welches die Resuspension der magnetischen Partikel (5) ermöglicht, **dadurch gekennzeichnet, dass** die Magnetisierung der Magnetisierungsquelle (7 oder 9) bei der Injektion einer Flüssigkeit zur Wiederherstellung der magnetischen Partikel (5) in dem Gefäß (1) auf den magnetischen Partikeln (5) beibehalten wird und dann nach dieser Injektion abgestellt wird.

6. Verfahren gemäß Anspruch 5, **dadurch gekennzeichnet, dass** die magnetischen Partikel (5) in Filamenten angeordnet sind, welche nach der **Nord·Süd-Achse** der Magnetisierungsquelle (7 oder 9) und parallel zur Bewegung der Injektion der Wiederherstellungsflüssigkeit ausgerichtet sind.

7. Verfahren gemäß einem der Ansprüche 1 bis 3, welches die Verlagerung der magnetischen Partikel (5) ermöglicht, **dadurch gekennzeichnet, dass** die Verlagerung der Magnetisierungsquelle (7 oder 9) und/oder des Gefäßes (1), unter Beibehaltung der Magnetisierung der magnetischen Partikel (5), durch die Drehung um 360° des Winkels zwischen der Nord-Süd-Achse der Magnetisierungsquelle (7 oder 9) und der Achse des Gefäßes (1) verwirklicht wird.

8. Verfahren gemäß Anspruch 7, **dadurch gekennzeichnet, dass** die Drehung um 360° eine Vielzahl von Malen verwirklicht wird, um eine geeignete Verlagerung der magnetischen Partikel (5) zu erreichen.

9. Eine Vorrichtung zur biologischen Analyse, zum Beispiel eine Immunoassay-Analysevorrichtung, wobei die Vorrichtung Mittel zum Führen und Verlagern von Reaktionsgefäßen (1) auf zumindest einem Weg umfasst, der eine vorbestimmte Anzahl an Positionen umfasst, **dadurch gekennzeichnet, dass** sie für jeden Weg eine Konfiguration von Magneten beinhaltet, wobei die Konfiguration von Magneten (6 und 7 oder 9) aus Folgendem besteht:
• einer stromaufwärts gelegenen Vielzahl von Magnetisierungsquellen von starker Intensität (6), so dass sich die magnetischen Partikel (5) an der Wand des Gefäßes ansammeln und
• einer stromabwärts gelegenen Magnetisierungsquelle von geringer Intensität (7 oder 9) gemäß einem der Ansprüche 1 bis 10, so dass die magnetischen Partikel (5) in Filamenten angeordnet sind, welche nach der Nord-Süd-Achse der Magnetisierungsquelle ausgerichtet sind.

10. Vorrichtung gemäß Anspruch 9, **dadurch gekennzeichnet, dass** jede Magnetisierungsquelle von starker Intensität (6) eine magnetische Induktion aufweist, die 20 bis 100 mal, vorzugsweise 30 bis 60 mal größer als die Magnetisierungsquelle von geringer Intensität (7 oder 9) ist, und dass jede Magnetisierungsquelle von starker Intensität (6) einen Abstand zu dem Gefäß aufweist, der 5 bis 20 mal, vorzugsweise 10 bis 15 mal kleiner als der Abstand zu der Magnetisierungsquelle von geringer Intensität (7 oder 9) ist.

11. Vorrichtung gemäß Anspruch 9 oder 10, **dadurch gekennzeichnet, dass** jede Magnetisierungsquelle von starker Intensität (6) bezüglich des Gefäßes (1) senkrecht zu der Magnetisierungsquelle von geringer Intensität (7 oder 9) positioniert ist.

12. Vorrichtung gemäß einem der Ansprüche 9 bis 11, **dadurch gekennzeichnet, dass** jede Magnetisierungsquelle von starker Intensität (6) bezüglich der durch die Öffnung (2) und den Boden (3) des Gefäßes (1) verlaufenden Achse lateral positioniert ist, und dass sich die Magnetisierungsquelle von geringer Intensität (7 oder 9) unter dem Boden (3) des Gefäßes (1) befindet.

13. Vorrichtung gemäß einem der Ansprüche 9 bis 12, **dadurch gekennzeichnet, dass**, je näher sich die Position der Magnetisierungsquelle von starker Intensität (6), entlang dem Weg, der eine vorbestimmte Anzahl von Positionen umfasst, an der Magnetisierungsquelle von geringer Intensität (7 oder 9) befindet, desto näher befindet sich die Position der Magnetisierungsquelle von starker Intensität (6) an dem Boden (3) des Gefäßes (1).

14. Vorrichtung gemäß einem der Ansprüche 9 bis 13, **dadurch gekennzeichnet, dass** die Magnetisierungsquelle von starker Intensität (6) aus Folgendem besteht:
• einer Reihe von Magneten, die sich auf derselben Seite der Gefäße (1) befinden, oder
• zwei Reihen von Magneten, die sich beiderseits der Gefäße (1) befinden, wobei die Magneten einer Reihe nebeneinander liegend positioniert sind, wobei die Nord-Süd-Pole auf dieselbe Art und Weise ausgerichtet sind.

15. Vorrichtung gemäß Anspruch 14, **dadurch gekennzeichnet, dass** die Magnetisierungsquelle von starker Intensität (6) zumindest einen entgegengesetzt gepolten Magneten (umgekehrtes Feld) beinhaltet, der das "Losbrechen" der magnetischen Partikel (5) begünstigt.

## Claims

1. A method for treating magnetic particles (5) present in solution (4) in a vessel (1), the magnetic particles (5) being associated or not to biological entities (antibodies, antigens, nucleic acids, etc.), the method consisting in:
• subjecting said magnetic particles (5) to a constant magnetic field in the form of magnetisation which is a function, essentially, of two values, T and D, where:
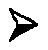 T corresponds to the magnetic induction of the magnetisation source (7 or 9), expressed for example in milliTesla (mT), and
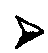 D corresponds to the distance separating this magnetisation source (7 or 9) from the bottom (3) of the vessel (1), expressed for example in millimetres (mm), such that when T is between 5 and 400mT, D is less than or equal to 50mm for ESTAPOR (registered trademark - reference: M1 70/60) magnetic particles (5) having a diameter which is substantially less than 1µ (Merk eurolab - Pitiviers France),
such that said magnetic particles (5) are disposed in filaments orientated along the north-south axis of a magnetisation source (7 or 9),
• moving the magnetisation source (7 or 9) and/or the vessel (1), while maintaining the magnetisation on the magnetic particles (5), and
• discontinuing the magnetisation on the magnetic particles (5) by moving said magnetisation source (7 or 9) and/or the vessel (1) and/or by stopping the magnetisation source (7 or 9).

2. The method, according to Claim 1, **characterised in that** the magnetic induction T of the magnetisation source (7 or 9) is between 10 and 50mT, and **in that** the distance separating this magnetisation source (7 or 9) from the vessel (1) is between 3 and 15mm.

3. The method, according to Claim 1, **characterised in that** the magnetic induction T of the magnetisation source (7 or 9) is less than 5mT when the distance separating this magnetisation source (7 or 9) from the bottom (3) of the vessel (1) is zero, i.e. said source (7 or 9) and said bottom (3) are in contact.

4. The method, according to any one of Claims 1 to 3, allowing for the washing of the magnetic particles (5), **characterised in that** the movement of the magnetisation source (7 or 9) and/or of the vessel (1), while maintaining the magnetic effect on the magnetic particles (5), is achieved by varying between -90° and +90° the angle between the north-south axis of said magnetisation source (7 or 9) and the axis of said vessel (1).

5. The method, according to any one of Claims 1 to 3, allowing for the resuspension of the magnetic particles (5), **characterised in that** the magnetisation of the magnetisation source (7 or 9) is maintained on the magnetic particles (5) during the injection of a restoring liquid for said magnetic particles (5) within the vessel (1), then is halted after this injection.

6. The method according to Claim 5, **characterised in that** the magnetic particles (5) are disposed in filaments orientated along the north-south axis of the magnetisation source (7 or 9) and in parallel to the injection motion of the restoring liquid.

7. The method, according to any one of Claims 1 to 3, allowing for the movement of magnetic particles (5), **characterised in that** the movement of the magnetisation source (7 or 9) and/or of the vessel (1), while maintaining the magnetisation on the magnetic particles (5), is achieved by the 360° rotation of the angle between the north-south axis of said magnetisation source (7 or 9) and the axis of said vessel (1).

8. The method, according to Claim 7, **characterised in that** the 360° rotation is effected a plurality of times so as to obtain an appropriate movement of the magnetic particles (5).

9. A biological analysis apparatus, for example for immunoassay, the apparatus including means for guiding and moving reaction vessels (1) on at least one path including a predetermined number of positions, **characterised in that** it comprises a configuration of magnets for each path, the configuration of magnets (6 and 7 or 9) being constituted:
• upstream of a plurality of high-intensity magnetisation sources (6), such that the magnetic particles (5) are agglomerated against the wall of the vessel, and
• downstream of a low-intensity magnetisation source (7 or 9), according to any one of Claims 1 to 10, such that said magnetic particles (5) are disposed in filaments orientated along the north-south axis of the magnetisation source.

10. The apparatus, according to Claim 9, **characterised in that** each high-intensity magnetisation source (6) has a magnetic induction which is 20 to 100 times, preferably 30 to 60 times greater than the low-intensity magnetisation source (7 or 9), and that each high-intensity magnetisation source (6) is at a distance from the vessel which is 5 to 20 times, preferably 10 to 15 times less than the distance from the low-intensity magnetisation source (7 or 9).

11. The apparatus, according to any one of Claims 9 or 10, **characterised in that** each high-intensity magnetisation source (6) is in a perpendicular position relative to the low-intensity magnetisation source (7 or 9), in relation to the vessel (1).

12. The apparatus, according to any one of Claims 9 to 11, **characterised in that** each high-intensity magnetisation source (6) is in a lateral position in relation to the axis passing through the opening (2) and the bottom (3) of the vessel (1), and that the low-intensity magnetisation source (7 or 9) is located beneath said bottom (3) of said vessel (1).

13. The apparatus, according to any one of Claims 9 to 12, **characterised in that** the closer the position of the high-intensity magnetisation source (6), along the path including a predetermined number of positions, to the low-intensity magnetisation source (7 or 9), the closer the position of said high-intensity magnetisation source (6) to the bottom (3) of the vessel (1).

14. The apparatus, according to any one of Claims 9 to 13, **characterised in that** the high-intensity magnetisation source (6) is constituted by:
• a row of magnets located on the same side of the vessels (1), or
• two rows of magnets located on either side of the vessels (1),
the magnets of a same row being positioned side by side, with the north-south poles being orientated in an identical manner.

15. The apparatus, according to Claim 14, **characterised in that** the high-intensity magnetisation source (6) comprises at least one reversed polarisation magnet (reverse field) which promotes the "loosening" of the magnetic particles (5).
